# EUROPEAN PATENT APPLICATION

(11) **EP 4 756 670 A1**
(43) Date of publication of application: **10.06.2026**
(21) Application number: 24876261.9
(22) Date of filing: 16.08.2024
(51) Int. Cl.: G06K 17/00

(54) **BATTERY CELL IDENTIFICATION METHOD AND SYSTEM**

(30) Priority: 11.10.2023 CN 202311310125
(71) Applicant: Contemporary Amperex Technology Co., Limited, Ningde, Fujian 352100 (CN)
(72) Inventor: SONG, Kuikui, Ningde, Fujian 352100 (CN); LUO, Jian, Ningde, Fujian 352100 (CN); WU, Ying, Ningde, Fujian 352100 (CN); MA, Yuhang, Ningde, Fujian 352100 (CN)
(74) Representative: Lorenz Seidler Gossel Part. mbB
(86) International application number: PCT/CN2024/112808
(87) International publication number: WO 2025/077441

(57) **Abstract**

Disclosed in embodiments of the present disclosure are a battery cell identification method and system. The method is applied to a battery cell identification system, and the identification system comprises: a camera, an industrial personal computer, and a production execution system. The method comprises: when the camera reaches a preset photography position, the camera photographs a battery cell to be identified, to obtain image data, and sends the image data to the industrial personal computer; the industrial personal computer performs image processing on the image data to obtain an identifier of said battery cell, and sends the identifier to the production execution system; and the production execution system determines an identification result of said battery cell on the basis of production information in the identifier.

## Description

### CROSS-REFERENCE TO RELATED APPLICATION

The present disclosure is proposed based on Chinese Patent Application No. 202311310125.X, filed on October 11, 2023 and entitled "CELL IDENTIFICATION METHOD AND SYSTEM" and claims priority to this Chinese Patent Application, the content of which is incorporated herein by reference in its entirety.

### TECHNICAL FIELD

The present disclosure relates to a cell identification technology for a battery production line, and in particular, to a cell identification method and system.

### BACKGROUND

At present, in the related art, during the battery production process, cell code scanning is performed using a single assembly to identify cells and distinguish unqualified ones. However, this method only involves code scanning and identification of the cells, and cannot control the identified qualified cells and unqualified cells, resulting in low production efficiency of the battery. Thus, it can be concluded that the existing code scanning and identification method for cells gives rise to the technical problem of low production efficiency in battery production.

### SUMMARY

Embodiments of the present disclosure provide a cell identification method and system, which can improve the production efficiency of a battery.

The technical solutions of the present disclosure are implemented as follows.

An embodiment of the present disclosure provides a cell identification method applied to a cell identification system including a camera, an industrial personal computer, and a manufacturing execution system. The above-mentioned method may include:
when the camera reaches a preset picture taking position, taking a picture, by the camera, of a cell to be identified to obtain image data, and sending the image data to the industrial personal computer;
performing, by the industrial personal computer, image processing on the image data to obtain an identifier of the cell to be identified, and sending the identifier to the manufacturing execution system; and
determining, by the manufacturing execution system based on production information in the identifier, an identification result of the cell to be identified.

In this way, after receiving the identifier of the cell to be identified, the manufacturing execution system can determine, based on the production information in the identifier of the cell to be identified, the identification result of the cell to be identified, so that the manufacturing execution system can know the identification result of the cell to be identified, which is beneficial to the production of subsequent processes of a production line, thereby improving the production efficiency of the battery.

In an optional embodiment, the production information may include one or more of the following:
a production batch number and a production date.

In this way, the identifier of the cell to be identified can be determined by using the production batch number and/or the production date, so that the determined identification result is more accurate, which is beneficial to the production of the subsequent processes of the production line, thereby improving the production efficiency of the battery.

In an optional embodiment, determining, by the manufacturing execution system based on the production information in the identifier, the identification result of the cell to be identified may include:
when the production batch number of the cell to be identified falls within a preset production batch number range and the production date of the cell to be identified falls within a preset date range, determining, by the manufacturing execution system, that the identification result of the cell to be identified indicates qualified; and
when the production batch number of the cell to be identified does not fall within the preset production batch number range, and/or the production date of the cell to be identified does not fall within the preset date range, determining, by the manufacturing execution system, that the identification result of the cell to be identified indicates unqualified.

In this way, by determining whether the production batch number falls within the preset production batch number range and determining whether the production date falls within the preset date range, whether the cell to be identified is qualified or unqualified can be determined, so that the manufacturing execution system knows which cells are qualified cells and which cells are unqualified cells, which is beneficial to the production of the subsequent processes, thereby improving the production efficiency of the battery.

In an optional embodiment, the identification system further includes a tray carrier and a programmable logic controller, where the tray carrier is configured to contain the cell to be identified, and correspondingly, the method may further include:
sending, by the manufacturing execution system, the identifier of the cell to be identified and the identification result of the cell to be identified to the industrial personal computer;
sending, by the industrial personal computer, the identifier of the cell to be identified and the identification result of the cell to be identified to the programmable logic controller; and
writing, by the programmable logic controller, the identifier of the cell to be identified and the identification result of the cell to be identified into a chip of the tray carrier,
where the chip of the tray carrier is in one-to-one correspondence with the cell to be identified.

In this way, with the circulation of the tray carrier, the identification result of each cell to be identified can be known through the chip corresponding to the cell to be identified, so as to determine whether to make the cell to be identified circulate into the subsequent processes, which is beneficial to the production of the subsequent processes, thereby improving the production efficiency of the battery.

In an optional embodiment, the identification system further includes an unqualified cell discharging port and a transfer mechanism, and correspondingly, the above-mentioned method may further include:
when the tray carrier reaches the unqualified cell discharging port, performing, by the programmable logic controller, code scanning on the chip of the tray carrier to obtain an identification result of the tray carrier; and
when the identification result of the tray carrier indicates that at least one cell to be identified is unqualified, controlling, by the programmable logic controller, the transfer mechanism to move, so that the tray carrier moves, through the unqualified cell discharging port, to a manual station where the unqualified cell is discharged, thus discharging the at least one unqualified cell to be identified.

In this way, by providing the unqualified cell discharging port at a cell code scanning station, the unqualified cell can be moved to the manual station where the unqualified cell is discharged, so as to take the unqualified cell away from the production line, which avoids the impact on the production efficiency caused by the unqualified cell circulating into the subsequent processes, thereby improving the production efficiency.

In an optional embodiment, the tray carrier may include a qualified cell to be identified and an unqualified cell to be identified, and the above-mentioned method may further include:
when the identification result of the tray carrier indicates that at least one cell to be identified is unqualified, controlling, by the programmable logic controller, the transfer mechanism to move, so that the tray carrier moves, through the unqualified cell discharging port, to the manual station where the unqualified cell is discharged, thus discharging the at least one unqualified cell to be identified, and then controlling, by the programmable logic controller, the tray carrier to return to an entrance position of a first process so as to re-enter the first process of a production line.

In this way, the qualified cell to be identified can re-enter the production of a module section, avoiding the waste of the qualified cell. At the same time, the qualified cell is automatically transferred to an entrance position of a cell loading station, thereby improving the production efficiency of the battery.

In an optional embodiment, the identification system may further include a tray carrier, a jacking mechanism, a servo driver, a servo motor, and a programmable logic controller, and correspondingly, the above-mentioned method may further include:
controlling, by the programmable logic controller, the jacking mechanism to lift, so as to lift the tray carrier, where the tray carrier is placed on the jacking mechanism, and the tray carrier contains the cell to be identified; and
when determining, by the programmable logic controller, that the jacking mechanism reaches a preset position, controlling the servo driver to drive the servo motor, so that the camera is lowered to the preset picture taking position.

In this way, the programmable logic controller controls the lifting of the jacking mechanism and controls the servo driver to drive the servo motor, so that the camera can reach the preset picture taking position to identify the cell to be identified, thereby improving the production efficiency of the battery.

In an optional embodiment, the identification system may further include an unqualified cell discharging port, and the above-mentioned method may further include:
when an identification result of the image data indicates that the image data does not meet a preset resolution condition, controlling, by the programmable logic controller, the cell to be identified to be discharged through the unqualified cell discharging port.

In this way, unclear image data is sent to the programmable logic controller for discharging, through the unqualified cell discharging port, the cell to be identified corresponding to the unclear image data. As a result, the cell to be identified for which it cannot be determined whether the production batch number falls within the preset production batch number range and whether the production date falls within the preset date range is discharged. Therefore, this prevents the cell to be identified with the production batch number not falling within the preset production batch number range and/or the production date not falling within the preset date range from being used as a qualified cell, which avoids affecting the subsequent processes, thereby improving the production efficiency of the battery.

An embodiment of the present disclosure provides a cell identification system, which may include: a camera, an industrial personal computer, and a manufacturing execution system, and may include:
the camera being configured to, when reaching a preset picture taking position, take a picture of a cell to be identified to obtain image data, and send the image data to the industrial personal computer;
the industrial personal computer being configured to perform image processing on the image data to obtain an identifier of the cell to be identified, and send the identifier to the manufacturing execution system; and
the manufacturing execution system being configured to determine, based on production information in the identifier, an identification result of the cell to be identified.

In this way, after receiving the identifier of the cell to be identified, the manufacturing execution system can determine, based on the production information in the identifier of the cell to be identified, the identification result of the cell to be identified, so that the manufacturing execution system can know the identification result of the cell to be identified, which is beneficial to the production of subsequent processes of a production line, thereby improving the production efficiency of the battery.

In an optional embodiment, the identification system further includes a programmable logic controller, and correspondingly, the camera is further configured to:
when the camera reaches the preset picture taking position, take a picture of the cell to be identified to obtain the image data, and send the image data to the programmable logic controller; and
the programmable logic controller is configured to send the image data to the industrial personal computer.

In this way, the industrial personal computer sends the identifier to the manufacturing execution system, so that the manufacturing execution system can determine, based on the production information in the identifier, the identification result of the cell to be identified, which is beneficial to the production of the subsequent processes of the production line, thereby improving the production efficiency of the battery.

In an optional embodiment, the production information includes one or more of the following:
a production batch number and a production date.

In this way, the identifier of the cell to be identified can be determined by using the production batch number and/or the production date, so that the determined identification result is more accurate, which is beneficial to the production of the subsequent processes of the production line, thereby improving the production efficiency of the battery.

In an optional embodiment, the manufacturing execution system may be further configured to:
when the production batch number of the cell to be identified falls within a preset production batch number range and the production date of the cell to be identified falls within a preset date range, determine that the identification result of the cell to be identified indicates qualified; and
when the production batch number of the cell to be identified does not fall within the preset production batch number range, and/or the production date of the cell to be identified does not fall within the preset date range, determine that the identification result of the cell to be identified indicates unqualified.

In this way, by determining whether the production batch number falls within the preset production batch number range and determining whether the production date falls within the preset date range, whether the cell to be identified is qualified or unqualified can be determined, so that the manufacturing execution system knows which cells are qualified cells and which cells are unqualified cells, which is beneficial to the production of the subsequent processes, thereby improving the production efficiency of the battery.

In an optional embodiment, the identification system further includes a tray carrier and a programmable logic controller, the tray carrier being configured to contain the cell to be identified, and correspondingly, may include:
the manufacturing execution system being further configured to send the identifier of the cell to be identified and the identification result of the cell to be identified to the industrial personal computer;
the industrial personal computer being further configured to send the identifier of the cell to be identified and the identification result of the cell to be identified to the programmable logic controller; and
the programmable logic controller being configured to write the identifier of the cell to be identified and the identification result of the cell to be identified into a chip of the tray carrier,
where the chip of the tray carrier is in one-to-one correspondence with the cell to be identified.

In this way, with the circulation of the tray carrier, the identification result of each cell to be identified can be known through the chip corresponding to the cell to be identified, so as to determine whether to make the cell to be identified circulate into the subsequent processes, which is beneficial to the production of the subsequent processes, thereby improving the production efficiency of the battery.

In an optional embodiment, the identification system further includes an unqualified cell discharging port and a transfer mechanism, and correspondingly, the programmable logic controller may be further configured to:
when the tray carrier reaches the unqualified cell discharging port, perform code scanning on the chip of the tray carrier to obtain an identification result of the tray carrier; and
when the identification result of the tray carrier indicates that at least one cell to be identified is unqualified, control the transfer mechanism to move, so that the tray carrier moves, through the unqualified cell discharging port, to a manual station where the unqualified cell is discharged, thus discharging the at least one cell to be identified.

In this way, by providing the unqualified cell discharging port at a cell code scanning station, the unqualified cell can be moved to the manual station where the unqualified cell is discharged, so as to take the unqualified cell away from the production line, which avoids the impact on the production efficiency caused by the unqualified cell circulating into the subsequent processes, thereby improving the production efficiency.

In an optional embodiment, the tray carrier includes a qualified cell to be identified and an unqualified cell to be identified, and the programmable logic controller may further be configured to:
when the identification result of the tray carrier indicates that at least one cell to be identified is unqualified, control, by the programmable logic controller, the transfer mechanism to move, so that the tray carrier moves, through the unqualified cell discharging port, to the manual station where the unqualified cell is discharged, thus discharging the at least one unqualified cell to be identified, and then control the tray carrier to return to an entrance position of a first process so as to re-enter the first process of a production line.

In this way, the qualified cell to be identified can re-enter the production of a module section, avoiding the waste of the qualified cell. At the same time, the qualified cell is automatically transferred to an entrance position of a cell loading station, thereby improving the production efficiency of the battery.

In an optional embodiment, the identification system further includes a tray carrier, a jacking mechanism, a servo driver, a servo motor, and a programmable logic controller, and correspondingly, the programmable logic controller may be configured to:
control the jacking mechanism to lift, so as to lift the tray carrier, where the tray carrier is placed on the jacking mechanism, and the tray carrier contains the cell to be identified; and
when determining that the jacking mechanism reaches a preset position, control the servo driver to drive the servo motor, so that the camera is lowered to the preset picture taking position.

In this way, the programmable logic controller controls the lifting of the jacking mechanism and controls the servo driver to drive the servo motor, so that the camera can reach the preset picture taking position to identify the cell to be identified, thereby improving the production efficiency of the battery.

In an optional embodiment, the identification system further includes a first conveying member and a second conveying member, the first conveying member and the second conveying member are spaced apart from each other in a first direction, the tray carrier is disposed above the first conveying member and the second conveying member in a spanning manner in the first direction, so that the first conveying member and the second conveying member are capable of jointly conveying the tray carrier in a second direction, and both the first direction and the second direction are perpendicular to a vertical direction; and the jacking mechanism is disposed corresponding to an interval between the first conveying member and the second conveying member in the first direction, and during a lifting process of the jacking mechanism, the jacking mechanism passes through the interval in the vertical direction to lift the tray carrier.

By making the jacking mechanism pass through the interval in the vertical direction to lift the tray carrier, a position where the jacking mechanism supports the tray carrier is located at a middle portion of the tray carrier in the first direction, which is facilitates more stable support of the jacking mechanism on the tray carrier, thereby maintaining balance during a lifting process of the tray carrier.

In an optional embodiment, the identification system further includes a programmable logic controller, and correspondingly, the camera is further configured to:
when the camera reaches the preset picture taking position, take a picture, by the camera, of the cell to be identified to obtain the image data, identify the image data to obtain an identification result of the image data, and send the image data and the identification result of the image data to the programmable logic controller; and
the programmable logic controller is configured to:
   when the identification result of the image data indicates that the image data meets a preset resolution condition, send the image data to the industrial personal computer.

In this way, the camera needs to send clear image data to the industrial personal computer through the programmable logic controller, so that the industrial personal computer performs image processing on the image data to obtain the identifier of the cell to be identified, so as to determine the identification result of the cell to be identified by the manufacturing execution system. The manufacturing execution system knows the identification result of the cell to be identified, which is beneficial to the production of the subsequent processes of the production line, thereby improving the production efficiency of the battery.

In an optional embodiment, the identification system further includes an unqualified cell discharging port, and correspondingly, the programmable logic controller may be further configured to:
when the identification result of the image data indicates that the image data does not meet the preset resolution condition, control the cell to be identified to be discharged through the unqualified cell discharging port.

In this way, unclear image data is sent to the programmable logic controller for discharging, through the unqualified cell discharging port, the cell to be identified corresponding to the unclear image data. As a result, the cell to be identified for which it cannot be determined whether the production batch number falls within the preset production batch number range and whether the production date falls within the preset date range is discharged. Therefore, this prevents the cell to be identified with the production batch number not falling within the preset production batch number range and/or the production date not falling within the preset date range from being used as a qualified cell, which avoids affecting the subsequent processes, thereby improving the production efficiency of the battery.

The embodiments of the present disclosure provide a cell identification method and system. The method is applied to the cell identification system. The identification system includes a camera, an industrial personal computer, and a manufacturing execution system. The method may include: when the camera reaches a preset picture taking position, taking a picture, by the camera, of a cell to be identified to obtain image data, and sending the image data to the industrial personal computer; performing, by the industrial personal computer, image processing on the image data to obtain an identifier of the cell to be identified, and sending the identifier to the manufacturing execution system; and determining, by the manufacturing execution system based on production information in the identifier, an identification result of the cell to be identified. That is, in the embodiments of the present disclosure, the image data of the cell to be identified is obtained through the camera, the industrial personal computer processes the image data to obtain the identifier of the cell to be identified, and the manufacturing execution system determines the identification result of the cell to be identified. In this way, the manufacturing execution system can know the identification result of the cell to be identified, which is beneficial to the production of the subsequent processes of the production line, thereby improving the production efficiency of the battery.

### BRIEF DESCRIPTION OF THE DRAWINGS

FIG. 1 is a schematic diagram of a module process according to an embodiment of the present disclosure;
FIG. 2 is a schematic diagram of a battery pack process according to an embodiment of the present disclosure;
FIG. 3 is a schematic structural diagram of an optional cell identification system according to an embodiment of the present disclosure;
FIG. 4 is a schematic flowchart of an optional cell identification method according to an embodiment of the present disclosure;
FIG. 5 is a schematic structural diagram of an example of an optional cell identification system according to an embodiment of the present disclosure;
FIG. 6 is a schematic diagram of QR code information of an optional cell according to an embodiment of the present disclosure;
FIG. 7 is a schematic structural diagram of an example of an optional cell code scanning station according to an embodiment of the present disclosure;
FIG. 8 is a schematic flowchart of an example of an optional cell identification method according to an embodiment of the present disclosure;
FIG. 9 is a schematic structural diagram of an optional jacking mechanism according to an embodiment of the present disclosure; and
FIG. 10 is a schematic diagram of an optional structure with a servo motor being in transmission connection with a camera according to an embodiment of the present disclosure.

### DETAILED DESCRIPTION

The technical solutions in embodiments of the present disclosure will be clearly and completely described hereinafter with reference to the drawings in the embodiments of the present disclosure.

In the production process of a battery, a production line includes a battery module section process and a battery pack section process, and may include at least two processes, namely a first process and a second process. In the embodiments of the present disclosure, the first process may be a process for producing a battery module, and the second process may be a process for producing a battery pack.

For the first process, when a first production work order changes, it takes a lot of time to manually switch the first production work order in the related art, resulting in a low utilization rate of the production line. To improve the utilization rate of the production line, in the embodiments of the present disclosure, an upper computer may be used to perform the switching of the first production work order.

The first process in the embodiments of the present disclosure may be the process for producing the battery module. For the production of the module, a production line of the module may include the following production devices: a cell loading device, a cell code scanning device, a side surface adhesive applying device, a side surface adhesive application inspection device, a cell stacking device, a module pressurizing device, and a module code scanning device. In addition, the production line may further include: the upper computer, a programmable logic controller (PLC), and a manufacturing execution system (MES), where the upper computer is in communication connection with the above-mentioned production devices, the PLC, and the MES for switching a work order for producing the module.

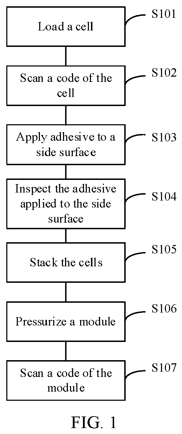

FIG. 1 is a schematic diagram of a module process according to an embodiment of the present disclosure. As shown in FIG. 1, the above-mentioned module process may sequentially include the following steps.

In S101, a cell is loaded.

Cell loading is performed on a first station of a module section.

In S102, a code of the cell is scanned.

In this process, the QR code of the cell can be scanned and identified to determine whether the cell is a qualified cell. This process is a process where a cell identification method in the embodiments of the present disclosure is performed.

In S103, adhesive is applied to a side surface.

In S104, the adhesive applied to the side surface is inspected.

In S105, the cells are stacked.

After the above-mentioned S103 to S105, a preliminary module formed by stacking a plurality of cells and stacking the plurality of cells on each other by using the applied adhesive may be obtained.

In S106, the module is pressurized.

This process mainly involves pressurizing the preliminary module.

In S107, a code of the module is scanned.

Code scanning of the module is performed on a terminal station of the module section.

The cell loading device loads a cell, the cell code scanning device performs cell code scanning on the cell, the side surface adhesive applying device performs side surface adhesive application on the cell, the cell stacking device stacks the cells, the module pressurizing device pressurizes the module, and the module code scanning device performs code scanning on the module.

It should be noted that the module in the embodiments of the present disclosure may be a square-case battery cell module, a cylindrical battery cell module, or a pouch battery cell module, which is not specifically limited in the embodiments of the present disclosure.

In addition, for the second process, when a second production work order changes, it takes a lot of time to manually switch the second production work order in the related art, resulting in a low utilization rate of the production line. To improve the utilization rate of the production line, in the embodiments of the present disclosure, the manufacturing execution system and station devices may be used for interaction to complete the switching of the second production work order.

The second process in the embodiments of the present disclosure may be the process for producing the battery pack. For the production of the battery pack, a production line of the battery pack may include the following station devices: a lower case body loading device, a water-cooling flange mounting device, a balance valve mounting device, a lower case body adhesive applying device, an adhesive application inspection device, a module placement device, a module pre-tightening device, a module tightening device, a post terminal addressing device, a ceramic coating separator (CCS) mounting device, a laser busbar (BSB) welding device, a post-welding inspection device, an insulating film bonding device, a smart junction box (SBOX) mounting device, a low-voltage wire harness mounting device, a battery pack high voltage mounting device, an SBOX upper cover mounting device, a cable tie fastening device, a sealing gasket mounting device, an upper cover tightening device, an air tightness testing device, an end of line (EOL) testing device, a direct current resistance (DCR) testing device, an appearance inspection device, and a weighing and EOL device. Among the above-mentioned station devices, the devices requiring switching of the second production work order may include: three module placement devices, one post terminal addressing device, one CCS mounting device, one BSB welding device, one lower case body adhesive applying device, one weighing and EOL device, one SBOX mounting device, one air tightness testing device, one EOL testing device, and one DCR testing device. In addition, the production line of the battery pack may further include: an MES configured to interact with the above-mentioned devices that require switching to the second production work order so as to realize the switching of the second production work order.

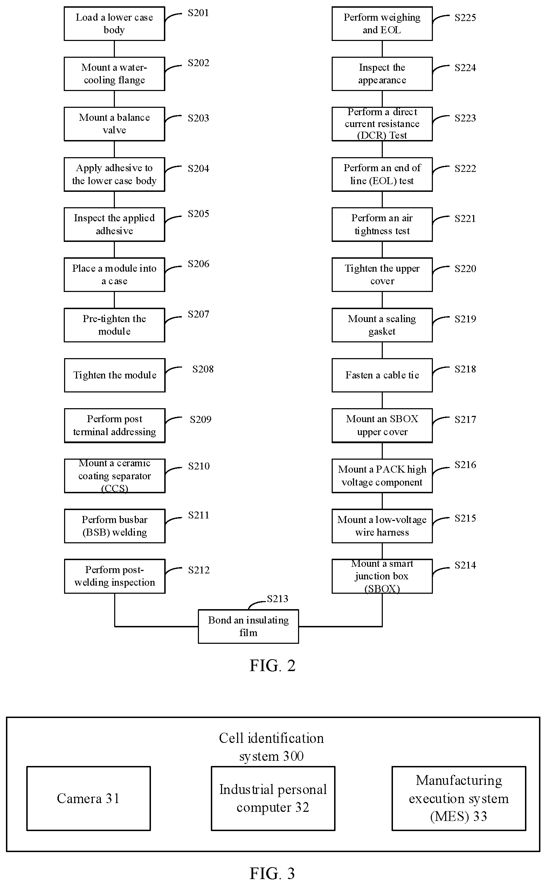

FIG. 2 is a schematic diagram of a battery pack process according to an embodiment of the present disclosure. As shown in FIG. 2, the above-mentioned battery pack process may sequentially include the following steps.

In S201, a lower case body is loaded.

The lower case body loading device, as a first station device of the battery pack section, mainly performs loading of the lower case body.

In S202, a water-cooling flange is mounted.

Here, after the lower case body is obtained, the water-cooling flange mounting device is configured to mount the water-cooling flange on the lower case body.

In S203, a balance valve is mounted.

After the water-cooling flange is mounted on the lower case body, the balance valve mounting device is configured to mount the balance valve on the lower case body.

In S204, adhesive is applied to the lower case body.

After the balance valve is mounted on the lower case body, the lower case body adhesive applying device is configured to apply adhesive to the lower case body.

In S205, the applied adhesive is inspected.

After the adhesive is applied to the lower case body, the adhesive application inspection device is configured to inspect the adhesive applied to the lower case body.

In S206, the module is placed into a case.

Here, after the adhesive applied to the lower case body is inspected, the module placement device is configured to place the module into the lower case body.

In S207, the module is pre-tightened.

After the module is placed in the lower case body, the module pre-tightening device is configured to pre-tighten the lower case body into which the module is placed.

In S208, the module is tightened.

After a module pre-tightening process, the module tightening device is configured to tighten the pre-tightened lower case body.

In S209, post terminal addressing is performed.

After a module tightening process, the post terminal addressing device performs post terminal addressing on the lower case body.

In S210, a CCS is mounted.

After a post terminal addressing process, the CCS mounting device is configured to mount the CCS on the lower case body.

In S211, a BSB is welded.

After a CCS mounting process, the BSB welding device performs BSB welding on the lower case body.

In S212, post-welding inspection is performed.

Here, after BSB welding, the post-welding inspection device performs post-welding inspection on the lower case body.

In S213, an insulating film is bonded.

Here, after a post-welding inspection process, the insulating film bonding device is configured to bond the insulating film to the lower case body.

In S214, an SBOX is mounted.

After an insulating film bonding process, the SBOX mounting device is configured to mount the SBOX on the lower case body.

In S215, a low-voltage wire harness is mounted.

After an SBOX mounting process, the low-voltage wire harness mounting device is configured to mount the low-voltage wire harness on the lower case body.

In S216, a high voltage of the battery pack is mounted.

Here, after a low-voltage wire harness mounting process, the battery pack high voltage mounting device is configured to mount the high voltage of the battery pack for the lower case body.

In S217, an upper cover of the SBOX is mounted.

After the high voltage of the battery pack is mounted, the SBOX upper cover mounting device is configured to mount the upper cover of the SBOX on the lower case body.

In S218, a cable tie is fastened.

Here, after a process of mounting the upper cover of the SBOX, the cable tie fastening device is configured to fasten the cable tie on the lower case body.

In S219, a sealing gasket is mounted.

After a cable tie fastening process, the sealing gasket mounting device is configured to mount the sealing gasket on the lower case body.

In S220, the upper cover is tightened.

After a sealing gasket mounting process, the upper cover tightening device is configured to tighten the upper cover on the lower case body.

In S221, an air tightness test is performed.

Here, after an upper cover tightening process, the air tightness testing device performs the air tightness test on the lower case body.

In S222, an EOL test is performed.

After the air tightness test, the EOL testing device performs the EOL test on the lower case body.

In S223, a DCR test is performed.

Here, after an EOL test process, the DCR testing device performs the DCR test on the lower case body.

In S224, the appearance is inspected.

After a DCR testing process, the appearance inspection device performs an appearance test on the lower case body, and a product that passes the appearance test may be referred to as the battery pack.

In S225, weighing and EOL are performed.

Weighing and EOL are performed as the last process of the battery pack section, and the weighing and EOL device performs weighing and EOL on the battery pack. In this way, all the processes of the entire battery pack section can be completed so as to obtain the battery pack.

It should be noted that the battery pack in the embodiments of the present disclosure may also be referred to as a battery case.

In the above-mentioned cell code scanning process, the main purpose is to identify which cells are qualified and which cells are unqualified. To improve the production efficiency of the battery, in the cell code scanning process, an embodiment of the present disclosure provides a cell identification method applied to a cell identification system. FIG. 3 is a schematic structural diagram of an optional cell identification system according to an embodiment of the present disclosure. As shown in FIG. 3, the cell identification system 300 may include: a camera 31, an industrial personal computer 32, and a manufacturing execution system 33. The cell identification (equivalent to the above-mentioned cell code scanning process) is performed as a process after the cell is loaded in the module section process, and is mainly used for performing code scanning and identification on the cell, where the camera 31 is configured to take a picture, vision software is installed on the industrial personal computer 32 for processing the captured pictures, and the manufacturing execution system 33 can be used for cell identification.

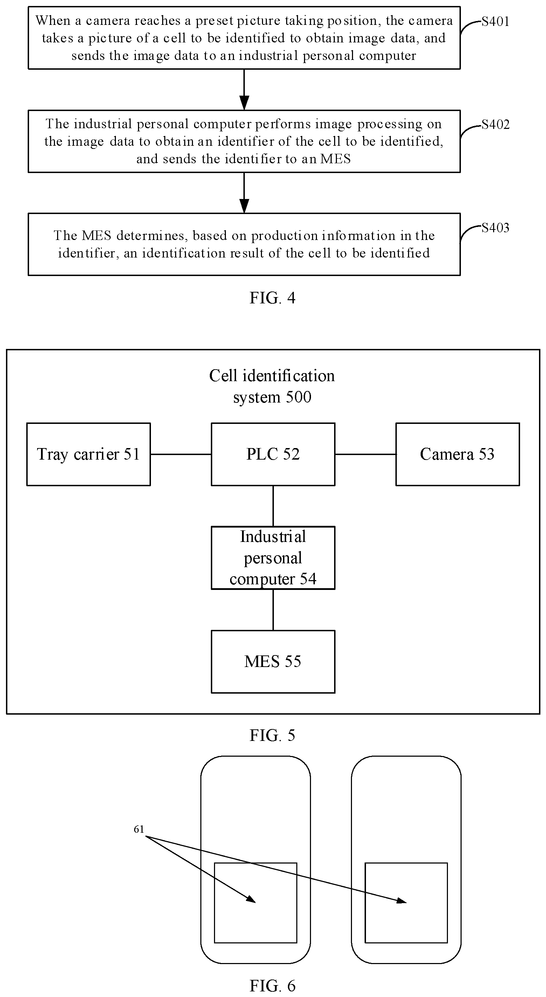

Based on the above-mentioned cell identification system 300 provided in FIG. 3, an embodiment of the present disclosure provides a cell identification method. FIG. 4 is a schematic flowchart of an optional cell identification method according to an embodiment of the present disclosure. As shown in FIG. 4, the cell identification method may include the following steps.

In S401, when a camera reaches a preset picture taking position, the camera takes a picture of a cell to be identified to obtain image data, and sends the image data to an industrial personal computer.

In the production of the battery, processes of the module section are performed first. In the processes of the module section, the first process is cell loading, and the next process following the cell loading, namely, the second process of the module section, is cell code scanning. In the embodiments of the present disclosure, when the cell code scanning is performed, the camera needs to reach the preset picture taking position. Here, a tray carrier containing the cell to be identified is lifted to a preset position by using a jacking mechanism, and then the camera is moved, so that the camera reaches the preset picture taking position.

After the camera reaches the preset picture taking position, the camera takes a picture of the cell to be identified so as to obtain the image data of the cell to be identified, and sends the image data to the industrial personal computer so as to obtain an identification result of the cell to be identified. Here, the camera may send the image data to the industrial personal computer through a programmable logic controller.

Here, it should be noted that the number of the above-mentioned cell to be identified may be one, two, three, or more, which is not specifically limited in the embodiments of the present disclosure.

A QR code is attached to each cell to be identified, and the QR code includes an identifier of the cell to be identified, which can be used to distinguish different cells to be identified.

In this way, after the camera obtains the image data of the cell to be identified by taking a picture, the image data of the cell to be identified is sent to the industrial personal computer so as to process the image data of the cell to be identified, thereby obtaining the identification result of the cell to be identified.

In S402, the industrial personal computer performs image processing on the image data to obtain the identifier of the cell to be identified, and sends the identifier to the manufacturing execution system.

After the camera sends the image data of the cell to be identified to the industrial personal computer in S401, the industrial personal computer receives the image data and performs image processing on the image data, where the image processing here may include: cropping, denoising, filtering, image feature extraction, and the like, so as to obtain the identifier of the cell to be identified, production information of the cell to be identified may be extracted from the identifier, and the production information may include one or more of the following: a production batch number and a production date. That is, after the industrial personal computer performs image processing on the image data, the identifier of the cell to be identified can be obtained, and the identifier may include: the production batch number, or may include: the production date, or may include: the production batch number and the production date, which is not specifically limited in the embodiments of the present disclosure.

Here, when the number of the cells to be identified is plural, the identifier of each cell to be identified may be obtained based on the acquired image data containing the cell to be identified. Finally, the industrial personal computer sends the identifier of the cell to be identified to the manufacturing execution system.

In S403, the manufacturing execution system determines, based on the production information in the identifier, the identification result of the cell to be identified.

In S402, the industrial personal computer sends the identifier of the cell to be identified to the manufacturing execution system. Then, in S403, after receiving the identifier of the cell to be identified, the manufacturing execution system extracts the production information of the cell to be identified from the identifier of the cell to be identified, and thus can determine, based on the production information, the identification result of the cell to be identified.

When the number of the cell to be identified is one, the identification result of the cell to be identified can be determined based on the production information in the identifier of the cell to be identified. When the number of the cells to be identified is two or more, the identification result of each cell to be identified can be determined based on the production information in the identifier of each cell to be identified.

In this way, after receiving the identifier of the cell to be identified, the manufacturing execution system can determine, based on the production information in the identifier of the cell to be identified, the identification result of the cell to be identified, so that the manufacturing execution system can know the identification result of the cell to be identified, which is beneficial to the production of subsequent processes of a production line, thereby improving the production efficiency of the battery.

To enable the manufacturing execution system to receive the identifier of the cell to be identified, in an optional embodiment, the identification system further includes a programmable logic controller, and the method may further include:

After the camera reaches the preset picture taking position, the programmable logic controller controls the camera to take a picture.

It can be understood that, after the camera reaches the preset picture taking position, the programmable logic controller controls the camera to take a picture. In this way, the camera takes a picture of the cell to be identified to obtain the image data, and then sends the image data to the industrial personal computer through programmable logic control. After receiving the image data, the industrial personal computer performs image processing, such as cropping, denoising, filtering, and image feature extraction, on the image data, so that the identifier of the cell to be identified can be extracted, where the identifier of the cell to be identified includes the production information of the cell to be identified. Therefore, here, the industrial personal computer can extract the production information of the cell to be identified from the identifier of the cell to be identified. The production information may include: the production batch number, or the production date, or the production batch number and the production date.

To enable the manufacturing execution system to determine the identification result of the cell to be identified, here, the industrial personal computer sends the identifier to the manufacturing execution system after obtaining the identifier of the cell to be identified.

In this way, the manufacturing execution system can determine, based on the production information in the identifier, the identification result of the cell to be identified, which is beneficial to the production of subsequent processes of the production line, thereby improving the production efficiency of the battery.

To determine the identification result of the cell to be identified, in an optional embodiment, S403 may include:
when the production batch number of the cell to be identified falls within a preset production batch number range and the production date of the cell to be identified falls within a preset date range, determining, by the manufacturing execution system, that the identification result of the cell to be identified indicates qualified; and
when the production batch number of the cell to be identified does not fall within the preset production batch number range, and/or the production date of the cell to be identified does not fall within the preset date range, determining, by the manufacturing execution system, that the identification result of the cell to be identified indicates unqualified.

It can be understood that, since the production information may include only the production batch number, only the production date, or both the production batch number and the production date, correspondingly, in determining, based on the production batch number, the identification result of the cell to be identified, the identification result of the cell to be identified can be determined solely based on the production batch number, or the identification result of the cell to be identified can be determined solely based on the production date, or the identification result of the cell to be identified can be determined based on the production batch number and the production date.

Here, in determining, based on the production batch number, the identification result of the cell to be identified, the production batch number may be compared with a preset production batch number range to determine whether the production batch number falls within the preset production batch number range. If the production batch number falls within the preset production batch number range, it indicates that the cell to be identified meets the production requirements, so the identification result of the cell to be identified is determined to indicate qualified; if the production batch number does not fall within the preset production batch number range, it is indicated that the cell to be identified does not meet the production requirements, so the cell to be identified is determined to be unqualified.

In determining, based on the production date, the identification result of the cell to be identified, the production date may be compared with a preset date range to determine whether the production date falls within the preset date range. If the production date falls within the preset date range, it indicates that the cell to be identified meets the production requirements, so the identification result of the cell to be identified is determined to indicate qualified; if the production date does not fall within the preset date range, it indicates that the cell to be identified does not meet the production requirements, so the cell to be identified is determined to be unqualified.

Then, in determining, based on the production batch number and the production date, the identification result of the cell to be identified, the production batch number may be compared with the preset production batch number range to determine whether the production batch number falls within the preset production batch number range, and the production date is compared with the preset date range to determine whether the production date falls within the preset date range. If both the production batch number and the production date fall within the preset ranges, it indicates that the cell to be identified meets the production requirements, so the identification result of the cell to be identified is determined to indicate qualified; otherwise, it indicates that the cell to be identified does not meet the production requirements, so the cell to be identified is determined to be unqualified.

In this way, by determining whether the production batch number falls within the preset production batch number range and determining whether the production date falls within the preset date range, whether the cell to be identified is qualified or unqualified can be determined, so that the manufacturing execution system knows which cells are qualified cells and which cells are unqualified cells, which is beneficial to the production of the subsequent processes, thereby improving the production efficiency of the battery.

To enable quick identification of qualified and unqualified cells in the subsequent processes, in an optional embodiment, the identification system may further include a tray carrier and a programmable logic controller, where the tray carrier is configured to contain the cell to be identified, and correspondingly, the above-mentioned method may further include:
sending, by the manufacturing execution system, the identifier of the cell to be identified and the identification result of the cell to be identified to the industrial personal computer;
sending, by the industrial personal computer, the identifier of the cell to be identified and the identification result of the cell to be identified to the programmable logic controller; and

The programmable logic controller writes the identifier of the cell to be identified and the identification result of the cell to be identified into a chip of the tray carrier.

It can be understood that after obtaining the identification result of the cell to be identified, the manufacturing execution system sends the identifier of the cell to be identified and the identification result of the cell to be identified together to the industrial personal computer, and then the industrial personal computer sends the identifier and the identification result together to the programmable logic controller. Since the cell to be identified is placed on the tray carrier, here, taking the tray carrier containing two cells to be identified as an example, for each tray carrier, the programmable logic controller writes the identifiers of the two cells to be identified on the tray carrier and the identification results of the two cells to be identified into the chip of each tray carrier, where the chip of the tray carrier is in one-to-one correspondence with the cell to be identified. In this way, the chip corresponding to each cell to be identified is disposed on each tray carrier, so that the identifier of each cell to be identified and the identification result of each cell to be identified can be written into the corresponding chip.

In this way, with the circulation of the tray carrier, the identification result of each cell to be identified can be known through the chip corresponding to the cell to be identified, so as to determine whether to make the cell to be identified circulate into the subsequent processes, which is beneficial to the production of the subsequent processes, thereby improving the production efficiency of the battery.

In addition, for the case where the tray carrier contains an unqualified cell to be identified, in an optional embodiment, the above-mentioned identification system may further include an unqualified cell discharging port and a transfer mechanism, and correspondingly, the above-mentioned method may further include:
when the tray carrier reaches the unqualified cell discharging port, performing, by the programmable logic controller, code scanning on the chip of the tray carrier to obtain an identification result of the tray carrier; and
when the identification result of the tray carrier indicates that at least one cell to be identified is unqualified, controlling, by the programmable logic controller, the transfer mechanism to move, so that the tray carrier moves, through the unqualified cell discharging port, to a manual station where the unqualified cell is discharged, thus discharging the at least one unqualified cell to be identified.

It can be understood that, with the circulation of the tray carrier, when the tray carrier reaches the unqualified cell discharging port, it should be noted that the unqualified cell discharging port is disposed at a cell code scanning station, and the unqualified cell discharging port is configured to discharge the unqualified cell. Specifically, when the tray carrier reaches the unqualified cell discharging port, a cell code scanning apparatus in the programmable logic controller is disposed at an entrance of the unqualified cell discharging port. By scanning the chip on the tray carrier with the cell code scanning apparatus, an identification result of the tray carrier can be obtained, where the identification result of the tray carrier is the identification result of all the cells on the tray carrier. For example, if the tray carrier contains two cells to be identified, the identification result of the tray carrier includes: the identification results of the two cells to be identified.

After the identification result of the tray carrier is known, when the identification result of the tray carrier indicates that at least one cell to be identified is unqualified; that is, at least one cell to be identified on the tray carrier needs to be discharged. In this case, the programmable logic controller controls the transfer mechanism to move. It should be noted that the movement of the transfer mechanism here enables the tray carrier to move, so that the tray carrier can move, through the unqualified cell discharging port, to a manual station where the unqualified cell is discharged. Then, when the tray carrier reaches the manual station, the at least one unqualified cell to be identified can be manually taken out.

In this way, by providing the unqualified cell discharging port at a cell code scanning station, the unqualified cell can be moved to the manual station where the unqualified cell is discharged, so as to take the unqualified cell away from the production line, which avoids the impact on the production efficiency caused by the unqualified cell circulating into the subsequent processes, thereby improving the production efficiency.

In addition, after the unqualified cell on the tray carrier is taken away, for the case where a qualified cell is still on the tray carrier, in an optional embodiment, the tray carrier may include a qualified cell to be identified and an unqualified cell to be identified, and the above-mentioned method may further include:
When the identification result of the tray carrier indicates that at least one cell to be identified is unqualified, the programmable logic controller controls the transfer mechanism to move, so that the tray carrier moves, through the unqualified cell discharging port, to the manual station where the unqualified cell is discharged, thus discharging the at least one unqualified cell to be identified, and then the programmable logic controller controls the tray carrier to return to an entrance position of the first process so as to re-enter the first process of the production line.

It can be understood that both the qualified cell to be identified and the unqualified cell to be identified are on the tray carrier. When the identification result of the tray carrier indicates that at least one cell to be identified is unqualified, the programmable logic controller controls the transfer mechanism to move, so that the tray carrier moves, through the unqualified cell discharging port, to the manual station where the unqualified cell is discharged, thus discharging the at least one unqualified cell to be identified. That is, after the unqualified cell to be identified on the tray carrier is taken away, the programmable logic controller controls the tray to return to the entrance position of the first process. Here, the first process of the module section is a cell loading process, so the tray carrier returns to an entrance position of a cell loading station so as to re-enter the cell loading process of the production line.

In this way, the qualified cell to be identified can re-enter the production of a module section, avoiding the waste of the qualified cell. At the same time, the qualified cell is automatically transferred to an entrance position of a cell loading station, thereby improving the production efficiency of the battery.

To enable the camera to reach the preset picture taking position to take a picture of the cell to be identified, in an optional embodiment, the above-mentioned identification system may further include a tray carrier, a jacking mechanism, a servo driver, a servo motor, and a programmable logic controller, and correspondingly, the above-mentioned method may further include:

The programmable logic controller controls the jacking mechanism to lift, so as to lift the tray carrier.
when determining, by the programmable logic controller, that the jacking mechanism reaches a preset position, controlling the servo driver to drive the servo motor, so that the camera is lowered to the preset picture taking position.

It can be understood that the tray carrier is placed on the jacking mechanism and may be lifted as the jacking mechanism is lifted. The tray carrier contains the cell to be identified, and thus, as the jacking mechanism is lifted, the cell to be identified is also lifted. Based on this, the programmable logic controller controls the jacking mechanism to lift, thereby lifting the tray carrier. Here, in practical applications, the programmable logic controller controls the jacking mechanism to be lifted to a highest position, and thus, the cell to be identified is also lifted to the highest position.

When the jacking mechanism reaches a preset position, the preset position may be the highest position to which the above-mentioned jacking mechanism can be lifted. In this case, the programmable logic controller controls the servo driver to drive the servo motor, and the operation of the servo motor here lowers the camera until the camera is lowered to the preset picture taking position. In this case, the camera can take a picture of the cell to be identified to obtain the image data containing the cell to be identified for the manufacturing execution system to identify the cell to be identified.

In this way, the programmable logic controller controls the lifting of the jacking mechanism and controls the servo driver to drive the servo motor, so that the camera can reach the preset picture taking position to identify the cell to be identified, thereby improving the production efficiency of the battery.

Further, to improve the production efficiency of the production line, in an optional embodiment, the identification system further includes: a programmable logic controller. Correspondingly, S401 may include:
when the camera reaches the preset picture taking position, the camera takes a picture of the cell to be identified to obtain the image data;
the camera identifies the image data to obtain the identification result of the image data, and sends the image data and the identification result of the image data to the programmable logic controller; and
when the identification result of the image data indicates that the image data meets a preset resolution condition, the programmable logic controller sends the image data to the industrial personal computer.

It can be understood that after the camera obtains the image data, the resolution of the image data is determined. Here, the identification result of the image data may be determined based on the resolution of the image data. When the resolution of the image data is less than a preset resolution, it is determined that the identification result of the image data indicates that the image data meets the preset resolution condition, and when the resolution of the image data is greater than or equal to the preset resolution, it is determined that the identification result of the image data indicates that the image data does not meet the preset resolution condition.

Here, the camera sends the image data meeting the preset resolution condition to the industrial personal computer through the programmable logic controller, and the industrial personal computer may obtain the identifier of the cell to be identified while performing image processing on the image data, so as to judge the cell to be identified in the manufacturing execution system, thereby determining whether the cell to be identified is qualified or unqualified.

In this way, unclear image data can be sent to the programmable logic controller for discharging through the unqualified cell discharging port. As a result, the cell to be identified for which it cannot be determined whether the production batch number falls within the preset production batch number range and whether the production date falls within the preset date range is discharged. Therefore, this prevents the cell to be identified with the production batch number not falling within the preset production batch number range and/or the production date not falling within the preset date range from being used as a qualified cell, which avoids affecting the subsequent processes, thereby improving the production efficiency of the battery.

In addition, for the image data determined to be clear, in an optional embodiment, the above-mentioned identification system further includes an unqualified cell discharging port. Correspondingly, S401 may include:
when an identification result of the image data indicates that the image data does not meet a preset resolution condition, controlling, by the programmable logic controller, the cell to be identified to be discharged through the unqualified cell discharging port.

It can be understood that clear image data can be sent to the industrial personal computer through the programmable logic controller to obtain the identifier of the cell to be identified, the camera sends the image data that does not meet the preset resolution condition to the programmable logic controller, and the programmable logic controller controls the transfer mechanism to move the tray carrier containing the cell to be identified, so that the tray carrier is discharged to the manual station through the unqualified cell discharging port and is manually taken away, which is similar to the above-mentioned method for discharging the unqualified cell, and thus will not be repeated herein.

That is, the camera needs to send the clear image data to the industrial personal computer through the programmable logic controller, so that the industrial personal computer performs image processing on the image data to obtain the identifier of the cell to be identified, so as to determine the identification result of the cell to be identified by the manufacturing execution system. The manufacturing execution system knows the identification result of the cell to be identified, which is beneficial to the production of the subsequent processes of the production line, thereby improving the production efficiency of the battery.

The cell identification method in one or more of the above-mentioned embodiments will be described below with an example.

In this example, FIG. 5 is a schematic structural diagram of an example of an optional cell identification system according to an embodiment of the present disclosure. As shown in FIG. 5, a cell identification system 500 may include: a tray carrier 51, a PLC 52, a camera 53, an industrial personal computer 54, and an MES 55. Based on FIG. 5, a working flow of the cell identification method is as follows:
In step 1, whether an incoming cell is in place is inspected.

Specifically, the tray carrier containing the cell to be identified arrives at the cell code scanning station via a logistics line and is placed on a jacking mechanism, and then the jacking mechanism acts to jack the tray carrier in place.

In step 2, a picture is automatically taken.

Specifically, a servo driver drives a servo motor to lower the camera to a preset picture taking position, and the camera takes a picture of the cell on the tray carrier at the picture taking position and saves the picture to the industrial personal computer, where vision software is installed on the industrial personal computer, and the camera is one of the key components of the cell code scanning device.

In step 3, a code is read and uploaded.

The vision software on the industrial personal computer performs image processing on the captured picture, reads QR code information (equivalent to the above-mentioned identifier) of the cell, and then uploads the QR code information to the MES.

Here, for a dual-row parallel logistics line, four cameras can take pictures of four cells at a time, or can take pictures of two cells at a time, and the QR code information is automatically identified after a picture is taken. FIG. 6 is a schematic diagram of QR code information of an optional cell according to an embodiment of the present disclosure. As shown in FIG. 6, pictures of two cells are taken at a time, including two cell QR codes 61.

In step 4, verification is performed by the MES.

Specifically, the MES verifies the QR code information of the cell, and determines whether the production batch number of the cell is within the preset production batch number range and whether the production date of the cell is within the preset production date range. If both the production batch number and the production date of the cell are within the preset ranges, it is determined that the identification result indicates qualified (OK); otherwise, it is determined that the identification result indicates unqualified (NG).

In step 5, binding is performed.

The PLC writes the QR code information of the cell and the identification result into a tray radio frequency identification (RFID) (equivalent to the chip on the above-mentioned tray carrier) based on the identification result transmitted back by the MES, so as to facilitate using and reading by a subsequent working station; one tray carrier is provided with two cells.

In step 6, NG discharging is performed.

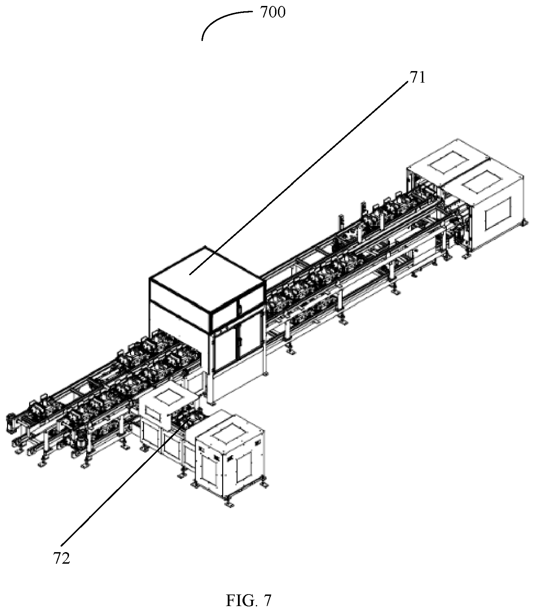

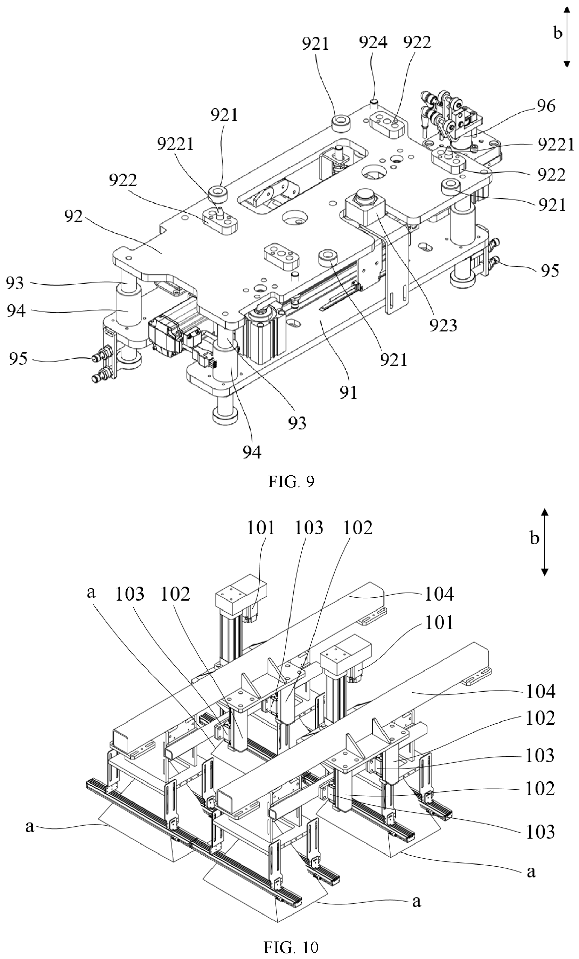

FIG. 7 is a schematic structural diagram of an example of an optional cell code scanning station according to an embodiment of the present disclosure. As shown in FIG. 7, a cell code scanning station 700 may include: a cell code scanning apparatus 71 and a manual station for discharging NG cells 72, where the cell code scanning apparatus 71 internally includes a jacking mechanism and a structure with a servo motor being in transmission connection with a camera, the jacking mechanism is located below the structure with the servo motor being in transmission connection with the camera. The specific structure of the jacking mechanism is shown in FIG. 9, and the structure with the servo motor being in transmission connection with the camera is shown in FIG. 10. For a cell whose QR code information is blurry and cannot be identified and verified by the MES as NG, the cell is automatically discharged from an NG port and manually taken away, and the tray carrier returns to circulation. When the QR code information is blurry and cannot be identified, the vision camera sends an NG signal to the PLC, the PLC controls the tray to be discharged from the NG port of the logistics line, and the same applies to NG discharging of the cell verified by the MES as NG.

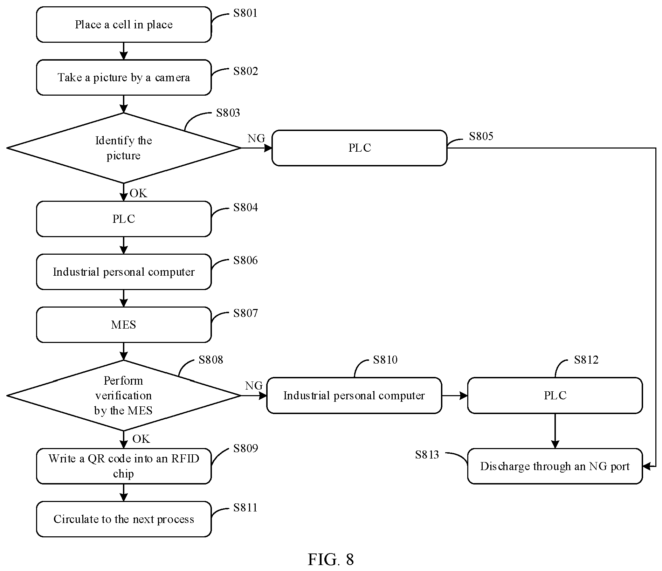

Based on the above-mentioned cell identification system of FIG. 5, FIG. 8 is a schematic flowchart of an example of an optional cell identification method according to an embodiment of the present disclosure. As shown in FIG. 8, the method may include the following steps.

In S801, a cell is in place.

Specifically, as described in the above-mentioned first step, the camera is lowered to the preset picture taking position, and the cell is lifted to the preset position, so that the cell is in place.

In S802, a picture is taken by the camera.

In S803, the camera identifies the picture; if the cell is an OK cell, S804 is performed, and if the cell is an NG cell, S805 is performed.

After the picture is taken by the camera, picture identification is carried out. If the QR code of the cell is clear, the picture is an OK picture, and if the QR code of the cell is blurry, the picture is an NG picture.

In S804, the camera sends the OK picture to the PLC, and S806 is performed.

In S805, the camera sends the NG picture to the PLC, and S813 is performed.

In S806, the PLC sends the NG picture to the industrial personal computer, and S807 is performed.

In S807, the industrial personal computer sends the NG picture to the MES, and S808 is performed.

In S808, the MES performs image processing based on the OK picture to obtain the QR code of the cell, and performs verification based on the QR code. After verification, if the OK cell is obtained, S809 is performed, and if the cell is the NG cell, S810 is performed.

Specifically, the verification manner is as described in the above-mentioned fourth step, and thus will not be repeated herein.

In S809, the MES writes the QR code of the OK cell into the RFID, and S811 is performed.

Specifically, the MES sends the QR code of the OK cell to the industrial personal computer, the industrial personal computer sends the QR code of the OK cell to the PLC, and the PLC writes the QR code of the OK cell into the RFID.

In S810, the MES sends the NG cell to the industrial personal computer, and S812 is performed.

In S811, the OK cell is circulated to the next process.

In S812, the industrial personal computer sends the NG cell to the PLC, and S813 is performed.

In S813, the PLC sends the NG cell and the cell corresponding to the NG picture to the NG port for discharge.

That is, in this example, a picture of the incoming cell is automatically taken for code scanning, the QR code information of the cell is uploaded to the MES, the MES determines whether the production batch number, the production date, and other information of the cell are within the specifications, and the MES transmits the determination result back to the industrial personal computer. The cell that fails in picture taking for code scanning and is determined by the MES as NG is automatically discharged from the NG port, the NG cell is manually taken away, and the tray returns to circulation.

The embodiment of the present disclosure provides a cell identification method. The method is applied to a cell identification system. The identification system includes a camera, an industrial personal computer, and a manufacturing execution system. The method may include: when the camera reaches a preset picture taking position, the camera takes a picture of a cell to be identified to obtain image data, and sends the image data to the industrial personal computer; the industrial personal computer performs image processing on the image data to obtain an identifier of the cell to be identified, and sends the identifier to the manufacturing execution system; and the manufacturing execution system determines, based on production information in the identifier, an identification result of the cell to be identified. That is, in the embodiment of the present disclosure, the image data of the cell to be identified is obtained through the camera, the industrial personal computer processes the image data to obtain the identifier of the cell to be identified, and the manufacturing execution system determines the identification result of the cell to be identified. In this way, the manufacturing execution system can know the identification result of the cell to be identified, which is beneficial to the production of the subsequent processes of the production line, thereby improving the production efficiency of the battery.

Based on the same inventive concept of the foregoing embodiments, in some embodiments of the present disclosure, as shown in FIG. 3, the cell identification system 300 may include: a camera 31, an industrial personal computer 32, and a manufacturing execution system 33. The embodiment corresponding to FIG. 3 and the embodiment corresponding to FIG. 5 are different embodiments. In the cell identification system 300, the camera 31 is configured to take a picture of the cell to be identified to obtain image data when reaching a preset picture taking position, and send the image data to the industrial personal computer 32. The industrial personal computer 32 is configured to perform image processing on the image data to obtain an identifier of the cell to be identified, and send the identifier to the manufacturing execution system 33. The manufacturing execution system 33 is configured to determine, based on production information in the identifier, an identification result of the cell to be identified.

In an optional embodiment, the production information includes one or more of the following:
a production batch number and a production date.

In an optional embodiment, the manufacturing execution system 33 is further configured to:
when the production batch number of the cell to be identified falls within a preset production batch number range and the production date of the cell to be identified falls within a preset date range, determine that the identification result of the cell to be identified indicates qualified; and
when the production batch number of the cell to be identified does not fall within the preset production batch number range, and/or the production date of the cell to be identified does not fall within the preset date range, determine that the identification result of the cell to be identified indicates unqualified.

In an optional embodiment, the identification system 300 further includes a tray carrier and a programmable logic controller, the tray carrier being configured to contain the cell to be identified, and correspondingly includes:
the manufacturing execution system 33 being further configured to send the identifier of the cell to be identified and the identification result of the cell to be identified to the industrial personal computer 32;
the industrial personal computer 32 being further configured to send the identifier of the cell to be identified and the identification result of the cell to be identified to the programmable logic controller; and
the programmable logic controller being configured to write the identifier of the cell to be identified and the identification result of the cell to be identified into a chip of the tray carrier,
where the chip of the tray carrier is in one-to-one correspondence with the cell to be identified.

In an optional embodiment, the identification system 300 further includes an unqualified cell discharging port and a transfer mechanism, and correspondingly, the programmable logic controller is further configured to:
when the tray carrier reaches the unqualified cell discharging port, perform code scanning on the chip of the tray carrier to obtain an identification result of the tray carrier; and
when the identification result of the tray carrier indicates that at least one cell to be identified is unqualified, control the transfer mechanism to move, so that the tray carrier moves, through the unqualified cell discharging port, to a manual station where the unqualified cell is discharged, thus discharging the at least one cell to be identified.

In an optional embodiment, the tray carrier includes a qualified cell to be identified and an unqualified cell to be identified, and the programmable logic controller is further configured to:
when the identification result of the tray carrier indicates that at least one cell to be identified is unqualified, control, by the programmable logic controller, the transfer mechanism to move, so that the tray carrier moves, through the unqualified cell discharging port, to the manual station where the unqualified cell is discharged, thus discharging the at least one unqualified cell to be identified, and then control the tray carrier to return to an entrance position of the first process so as to re-enter the first process of the production line.

In an optional embodiment, the identification system 300 further includes a tray carrier, a jacking mechanism, a servo driver, a servo motor, and a programmable logic controller, and correspondingly, the programmable logic controller is configured to:
control the jacking mechanism to lift, so as to lift the tray carrier, where the tray carrier is placed on the jacking mechanism, and the tray carrier contains the cell to be identified; and
when determining that the jacking mechanism reaches a preset position, control the servo driver to drive the servo motor, so that the camera is lowered to the preset picture taking position.

In an optional embodiment, the identification system 300 further includes a first conveying member and a second conveying member; the first conveying member and the second conveying member are spaced apart from each other in a first direction, the tray carrier is disposed above the first conveying member and the second conveying member in a spanning manner in the first direction, so that the first conveying member and the second conveying member are capable of jointly conveying the tray carrier in a second direction, and both the first direction and the second direction are perpendicular to a vertical direction; the jacking mechanism is disposed corresponding to an interval between the first conveying member and the second conveying member in the first direction, and during a lifting process of the jacking mechanism, the jacking mechanism passes through the interval in the vertical direction to lift the tray carrier.

The jacking mechanism in the embodiment of the present disclosure is disposed corresponding to the interval between the first conveying member and the second conveying member in the first direction; that is, the interval between the first conveying member and the second conveying member is flush with the jacking mechanism in the first direction, so that during the lifting process of the jacking mechanism, the jacking mechanism passes through the interval to support the lower part of the tray carrier, so as to lift the tray carrier.

By making the jacking mechanism pass through the interval in the vertical direction to lift the tray carrier, a position where the jacking mechanism supports the tray carrier is located at a middle portion of the tray carrier in the first direction, which is facilitates more stable support of the jacking mechanism on the tray carrier, thereby maintaining balance during a lifting process of the tray carrier.

In an optional embodiment, the first direction is perpendicular to the second direction. In this way, it is convenient for the first conveying member and the second conveying member to stably convey the tray carrier.

In an optional embodiment, referring to FIG. 9, the jacking mechanism includes a base 91, a driving member, and a jacking plate 92; the driving member is disposed on the base 91, a thickness direction of the jacking plate 92 is a vertical direction b, and the jacking plate 92 is disposed at an output end of the driving member so as to be able to move relative to the base 91 in the vertical direction b under driving of the output end of the driving member, thereby supporting the tray carrier and lifting the tray carrier.

By making the thickness direction of the jacking plate 92 as the vertical direction b, the jacking plate 92 can stably support the tray carrier.

In an optional embodiment, referring to FIG. 9, a plurality of first support blocks 921 are convexly formed on an upper end surface of the jacking plate 92, and planes where the upper end surfaces of the plurality of first support blocks 921 are located are all perpendicular to the vertical direction b and are coplanar; a plurality of abutting surfaces are formed on the tray carrier corresponding to the upper end surfaces of the plurality of first support blocks 921, and planes where the plurality of abutting surfaces are located are all perpendicular to the vertical direction b and are coplanar; the plurality of abutting surfaces are correspondingly attached to the upper end surfaces of the plurality of first support blocks 921, so that the tray carrier is supported on the jacking plate 92.

By supporting the tray carrier on the plurality of first support blocks 921 to be supported on the jacking plate 92, the area of the upper end surface of the first support block 921 is small, which is beneficial to ensuring the flatness, thereby facilitating improving the stability of the jacking mechanism for supporting the tray carrier.

In an optional embodiment, referring to FIG. 9, the plurality of first support blocks 921 are distributed in an array. Illustratively, in an optional embodiment, the number of the first support blocks 921 is four, and the four first support blocks 921 are distributed in a rectangular shape. In this way, it facilitates more stable support of the tray carrier by the jacking mechanism.

In an optional embodiment, referring to FIG. 9, a positioning pin 9221 is convexly formed on the upper end surface of the jacking plate 92, and a positioning hole is formed in the tray carrier corresponding to the positioning pin 9221. During the lifting process of the jacking mechanism, the positioning pin 9221 can extend into the positioning hole to limit the jacking plate 92 in a horizontal direction. In this way, it is beneficial for the tray carrier to remain fixed relative to the jacking mechanism in the horizontal direction during the process of jacking the tray carrier by the jacking mechanism, thereby facilitating the camera to take a picture of the cell. In an optional embodiment, a plurality of the positioning pins 9221 may be provided. This helps to improve the positioning effect.

In an optional embodiment, referring to FIG. 9, a second support block 922 is convexly formed on the upper end surface of the jacking plate 92, an upper end surface of the second support block 922 is coplanar with the upper end surface of the first support block 921, and the upper end surface of the second support block 922 may support the tray carrier. The upper end surface of the second support block 922 protrudes upward to form the positioning pin 9221. In this way, it facilitates more stable support of the tray carrier by the jacking mechanism.

In an optional embodiment, referring to FIG. 9, a writing module 923 is disposed on the upper end surface of the jacking plate 92, the writing module 923 belongs to a part of the programmable logic controller, and the writing module 923 is configured to write the identifier of the cell to be identified and the identification result of the cell to be identified into the chip of the tray carrier.

By providing the writing module 923 on the upper end surface of the jacking plate 92, the writing module 923 is close to the tray carrier, which is beneficial to ensuring the normal operation of the function of the writing module 923.

In an optional embodiment, referring to FIG. 9, a first sensor 924 is disposed on the upper end surface of the jacking plate 92, and the first sensor 924 is configured to detect the position of the tray carrier, so that when the tray carrier moves to a position opposite to the jacking mechanism in the vertical direction b, the jacking mechanism can lift the tray carrier based on output information of the first sensor 924.

By providing the first sensor 924 on the upper end surface, the first sensor 924 is close to the tray carrier, which facilitates improving the detection accuracy of the first sensor 924.

In an optional embodiment, referring to FIG. 9, the identification system further includes a second sensor 95, the second sensor 95 is configured to detect the lifting height of the jacking plate 92, so that when the jacking mechanism reaches the preset position, the camera can take a picture based on output information of the second sensor 95.

In an optional embodiment, referring to FIG. 9, the identification system further includes sliding columns 93 and sliding sleeves 94; the sliding column 93 is formed by protruding downward from a lower end surface of the jacking plate 92 and is fixedly connected to the jacking plate 92, and an axial direction of the sliding column 93 is the vertical direction b; the sliding sleeve 94 is fixedly connected to one end of the base 91 facing the jacking plate 92, and the sliding column 93 is slidably disposed downward in the sliding sleeve 94 in a penetrating manner in the vertical direction b to be matched with the sliding sleeve 94.

Through the sliding fit between the sliding column 93 and the sliding sleeve 94, the relative sliding of the sliding column 93 and the sliding sleeve 94 can guide the jacking plate 92 during the lifting process of the jacking plate 92, so that the lifting action of the jacking plate 92 is more stable.

In an optional embodiment, referring to FIG. 9, a plurality of sliding columns 93 and sliding sleeves 94 are disposed, and are disposed in one-to-one correspondence. In this way, the lifting action of the jacking plate 92 is facilitated to be more stable. In an optional embodiment, the sliding columns 93 are distributed in an array in the horizontal direction. In this way, the lifting action of the jacking plate 92 is facilitated to be more stable.

In an optional embodiment, referring to FIG. 9, the identification system further includes a stopping member 96, the stopping member 96 is fixedly connected to the jacking plate 92 and protrudes upward relative to the upper end surface of the jacking plate 92, and the stopping member 96 and the jacking plate 92 are arranged in the second direction to abut against the tray carrier in the second direction, thereby limiting the tray carrier.

By providing the stopping member 96, when the tray carrier moves to the position corresponding to the jacking plate 92 in the second direction, the stopping member 96 can limit the tray carrier, so that the tray carrier is less prone to continued movement in the second direction, but remains at the position corresponding to the jacking plate 92, and the jacking plate 92 can smoothly jack up the tray carrier.

In an optional embodiment, referring to FIG. 10, the identification system further includes mounting frames 104. A servo motor 101 is fixedly connected to the mounting frames 104, the mounting frame 104 is provided with slide rails 102, an extension direction of the slide rail 102 is the vertical direction b, the camera is matched with the slide rail 102 through a slider 103, and the servo motor 101 can drive the slider 103 to slide along the slide rail 102, thereby enabling the camera to be lifted and lowered. The acquisition range of the camera refers to reference numeral a in FIG. 10.

In an optional embodiment, referring to FIG. 10, a plurality of cameras is provided, and the plurality of cameras are distributed in an array in the horizontal direction. In this way, the plurality of cameras can simultaneously take pictures of a plurality of cells on the production line, which is beneficial to improving the production efficiency.

In an optional embodiment, the identification system 300 further includes a programmable logic controller, and correspondingly,
the camera 31 is further configured to:
when the camera reaches the preset picture taking position, take a picture, by the camera, of the cell to be identified to obtain the image data, identify the image data to obtain an identification result of the image data, and send the image data and the identification result of the image data to the programmable logic controller; and
the programmable logic controller is configured to:
   send, when the identification result of the image data indicates that the image data meets the preset resolution condition, the image data to the industrial personal computer 32.

In an optional embodiment, the identification system further includes an unqualified cell discharging port, and correspondingly, the programmable logic controller is further configured to:
when the identification result of the image data indicates that the image data does not meet the preset resolution condition, control the cell to be identified to be discharged through the unqualified cell discharging port.

The present disclosure is described with reference to flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer program instructions. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The above describes only preferred embodiments of the present disclosure and is not intended to limit the scope of the present disclosure.

## Claims

1. A cell identification method, applied to a cell identification system comprising a camera, an industrial personal computer, and a manufacturing execution system, the method comprising:
when the camera reaches a preset picture taking position, taking a picture, by the camera, of a cell to be identified to obtain image data, and sending the image data to the industrial personal computer;
performing, by the industrial personal computer, image processing on the image data to obtain an identifier of the cell to be identified, and sending the identifier to the manufacturing execution system; and
determining, by the manufacturing execution system based on production information in the identifier, an identification result of the cell to be identified.

2. The cell identification method according to claim 1, wherein the production information comprises one or more of the following:
a production batch number and a production date.

3. The cell identification method according to claim 2, wherein determining, by the manufacturing execution system based on the production information in the identifier, the identification result of the cell to be identified, comprises:
when the production batch number of the cell to be identified falls within a preset production batch number range and the production date of the cell to be identified falls within a preset date range, determining, by the manufacturing execution system, that the identification result of the cell to be identified indicates qualified; and
when the production batch number of the cell to be identified does not fall within the preset production batch number range, and/or the production date of the cell to be identified does not fall within the preset date range, determining, by the manufacturing execution system, that the identification result of the cell to be identified indicates unqualified.

4. The cell identification method according to any one of claims 1 to 3, wherein the identification system further comprises a tray carrier and a programmable logic controller, wherein the tray carrier is configured to contain the cell to be identified, and correspondingly, the method further comprises:
sending, by the manufacturing execution system, the identifier of the cell to be identified and the identification result of the cell to be identified to the industrial personal computer;
sending, by the industrial personal computer, the identifier of the cell to be identified and the identification result of the cell to be identified to the programmable logic controller; and
writing, by the programmable logic controller, the identifier of the cell to be identified and the identification result of the cell to be identified into a chip of the tray carrier,
wherein the chip of the tray carrier is in one-to-one correspondence with the cell to be identified.

5. The cell identification method according to claim 4, wherein the identification system further comprises an unqualified cell discharging port and a transfer mechanism, and correspondingly, the method further comprises:
when the tray carrier reaches the unqualified cell discharging port, performing, by the programmable logic controller, code scanning on the chip of the tray carrier to obtain an identification result of the tray carrier; and
when the identification result of the tray carrier indicates that at least one cell to be identified is unqualified, controlling, by the programmable logic controller, the transfer mechanism to move, so that the tray carrier moves, through the unqualified cell discharging port, to a manual station where the unqualified cell is discharged, thus discharging the at least one unqualified cell to be identified.

6. The cell identification method according to claim 5, wherein the tray carrier comprises a qualified cell to be identified and an unqualified cell to be identified, and the method further comprises:
when the identification result of the tray carrier indicates that at least one cell to be identified is unqualified, controlling, by the programmable logic controller, the transfer mechanism to move, so that the tray carrier moves, through the unqualified cell discharging port, to the manual station where the unqualified cell is discharged, thus discharging the at least one unqualified cell to be identified, and then controlling, by the programmable logic controller, the tray carrier to return to an entrance position of a first process so as to re-enter the first process of a production line.

7. The cell identification method according to any one of claims 1 to 6, wherein the identification system further comprises a tray carrier, a jacking mechanism, a servo driver, a servo motor, and a programmable logic controller, and correspondingly, the method further comprises:
controlling, by the programmable logic controller, the jacking mechanism to lift, so as to lift the tray carrier, wherein the tray carrier is placed on the jacking mechanism, and the tray carrier contains the cell to be identified; and
when determining, by the programmable logic controller, that the jacking mechanism reaches a preset position, controlling the servo driver to drive the servo motor, so that the camera is lowered to the preset picture taking position.

8. The cell identification method according to any one of claims 1 to 6, wherein the identification system further comprises a programmable logic controller, and correspondingly, when the camera reaches the preset picture taking position, taking a picture, by the camera, of the cell to be identified to obtain the image data, and sending the image data to the industrial personal computer, comprises:
when the camera reaches the preset picture taking position, taking a picture, by the camera, of the cell to be identified to obtain the image data;
identifying, by the camera, the image data to obtain an identification result of the image data, and sending the image data and the identification result of the image data to the programmable logic controller; and
when the identification result of the image data indicates that the image data meets a preset resolution condition, sending, by the programmable logic controller, the image data to the industrial personal computer.

9. The cell identification method according to claim 8, wherein the identification system further comprises an unqualified cell discharging port, and correspondingly, the method further comprises:
when the identification result of the image data indicates that the image data does not meet the preset resolution condition, controlling, by the programmable logic controller, the cell to be identified to be discharged through the unqualified cell discharging port.

10. The cell identification method according to any one of claims 1 to 9, wherein the identification system further comprises a programmable logic controller, and the method further comprises:
after the camera reaches the preset picture taking position, controlling, by the programmable logic controller, the camera to take a picture.

11. A cell identification system, comprising: a camera, an industrial personal computer, and a manufacturing execution system, comprising:
the camera being configured to, when reaching a preset picture taking position, take a picture of a cell to be identified to obtain image data, and send the image data to the industrial personal computer;
the industrial personal computer being configured to perform image processing on the image data to obtain an identifier of the cell to be identified, and send the identifier to the manufacturing execution system; and
the manufacturing execution system being configured to determine, based on production information in the identifier, an identification result of the cell to be identified.

12. The cell identification system according to claim 11, wherein the production information comprises one or more of the following:
a production batch number and a production date.

13. The cell identification system according to claim 12, wherein the manufacturing execution system is further configured to:
when the production batch number of the cell to be identified falls within a preset production batch number range and the production date of the cell to be identified falls within a preset date range, determine that the identification result of the cell to be identified indicates qualified; and
when the production batch number of the cell to be identified does not fall within the preset production batch number range, and/or the production date of the cell to be identified does not fall within the preset date range, determine that the identification result of the cell to be identified indicates unqualified.

14. The cell identification system according to any one of claims 11 to 13, wherein the identification system further comprises a tray carrier and a programmable logic controller, the tray carrier being configured to contain the cell to be identified, and correspondingly, comprises:
the manufacturing execution system being further configured to send the identifier of the cell to be identified and the identification result of the cell to be identified to the industrial personal computer;
the industrial personal computer being further configured to send the identifier of the cell to be identified and the identification result of the cell to be identified to the programmable logic controller; and
the programmable logic controller being configured to write the identifier of the cell to be identified and the identification result of the cell to be identified into a chip of the tray carrier,
wherein the chip of the tray carrier is in one-to-one correspondence with the cell to be identified.

15. The cell identification system according to claim 14, wherein the identification system further comprises an unqualified cell discharging port and a transfer mechanism, and correspondingly, the programmable logic controller is further configured to:
when the tray carrier reaches the unqualified cell discharging port, perform code scanning on the chip of the tray carrier to obtain an identification result of the tray carrier; and
when the identification result of the tray carrier indicates that at least one cell to be identified is unqualified, control the transfer mechanism to move, so that the tray carrier moves, through the unqualified cell discharging port, to a manual station where the unqualified cell is discharged, thus discharging the at least one cell to be identified.

16. The cell identification system according to claim 15, wherein the tray carrier comprises a qualified cell to be identified and an unqualified cell to be identified, and the programmable logic controller is further configured to:
when the identification result of the tray carrier indicates that at least one cell to be identified is unqualified, control, by the programmable logic controller, the transfer mechanism to move, so that the tray carrier moves, through the unqualified cell discharging port, to the manual station where the unqualified cell is discharged, thus discharging the at least one unqualified cell to be identified, and then control the tray carrier to return to an entrance position of a first process so as to re-enter the first process of a production line.

17. The cell identification system according to any one of claims 11 to 16, wherein the identification system further comprises a tray carrier, a jacking mechanism, a servo driver, a servo motor, and a programmable logic controller, and correspondingly, the programmable logic controller is configured to:
control the jacking mechanism to lift, so as to lift the tray carrier, wherein the tray carrier is placed on the jacking mechanism, and the tray carrier contains the cell to be identified; and
when determining that the jacking mechanism reaches a preset position, control the servo driver to drive the servo motor, so that the camera is lowered to the preset picture taking position.

18. The cell identification system according to claim 17, further comprising a first conveying member and a second conveying member, wherein the first conveying member and the second conveying member are spaced apart from each other in a first direction, the tray carrier is disposed above the first conveying member and the second conveying member in a spanning manner in the first direction, so that the first conveying member and the second conveying member are capable of jointly conveying the tray carrier in a second direction, and both the first direction and the second direction are perpendicular to a vertical direction; and
the jacking mechanism is disposed corresponding to an interval between the first conveying member and the second conveying member in the first direction, and during a lifting process of the jacking mechanism, the jacking mechanism passes through the interval in the vertical direction to lift the tray carrier.

19. The cell identification system according to any one of claims 11 to 18, wherein the identification system further comprises a programmable logic controller, correspondingly,
the camera is further configured to:
when the camera reaches the preset picture taking position, take a picture, by the camera, of the cell to be identified to obtain the image data, identify the image data to obtain an identification result of the image data, and send the image data and the identification result of the image data to the programmable logic controller; and
the programmable logic controller is configured to:
when the identification result of the image data indicates that the image data meets a preset resolution condition, send the image data to the industrial personal computer.

20. The cell identification system according to claim 19, wherein the identification system further comprises an unqualified cell discharging port, and correspondingly, the programmable logic controller is further configured to:
when the identification result of the image data indicates that the image data does not meet the preset resolution condition, control the cell to be identified to be discharged through the unqualified cell discharging port.
